# EUROPEAN PATENT SPECIFICATION

(11) **EP 4 433 847 B1**
(45) Date of publication and mention of the grant of the patent: **18.03.2026**
(21) Application number: 22818375.2
(22) Date of filing: 17.11.2022
(51) Int. Cl.: G01S 17/86, G01S 17/89, G01C 3/06, G01C 15/00

(54) **DEVICES AND METHODS FOR OBTAINING DIMENSIONS AND FEATURES OF AN OBJECT**
VORRICHTUNGEN UND VERFAHREN ZUR GEWINNUNG VON ABMESSUNGEN UND MERKMALEN EINES OBJEKTS
DISPOSITIFS ET PROCÉDÉS D'OBTENTION DE DIMENSIONS ET DE CARACTÉRISTIQUES D'UN OBJET

(30) Priority: 17.11.2021 GB 202116602
(43) Date of publication of application: 25.09.2024
(60) Divisional application: 25204579.4
(73) Proprietor: 3D Technologies Ltd, Warwick CV34 6UW (GB)
(72) Inventor: ROCK, Alan, WARWICK (GB); KRIEGLER, Eduard, WARWICK (GB)
(74) Representative: Matter IP Limited
(86) International application number: PCT/EP2022/082322
(87) International publication number: WO 2023/089055

(56) References cited:
- EP-A1- 3 527 938
- US-A1- 2014 002 806
- US-A1- 2014 267 717

## Description

### Technical field

The invention relates to identifying features and/or measuring dimensions of physical objects. In particular, the invention may relate to, but need not be limited to, measuring the dimensions of an at least partially enclosed space, such as a room of a building. In certain arrangements, the invention may relate to, but need not be limited to, the determination of a location of one or more features of a room of a building, such as doors and windows.

### Background

In many circumstances, it is desirable to be able to determine the internal dimensions and orientation of one or more walls of a room of a building. In addition, it may also be desirable to determine the location and/or dimensions of one or more features of the room, such as room openings, e.g. windows and doors.

Traditional techniques for determining these dimensions/features involve the manual use of a tape measure or other linear distance measuring device. Each wall and feature of a room must be measured manually, recorded and sketched or transferred to a suitable technical drawing software platform so that the room can be represented schematically. Errors using such techniques are common and sometimes large. Also, the process is time consuming.

Measuring devices exist that comprise inertial sensors configured to measure inertial data representing rotational velocity and acceleration of the device in three orthogonal axes. The inertial data may be processed to determine the dimensions and orientation of one or more walls of a room. For example, a measuring device may be placed at locations on a plurality of walls, where the device is held stationary for a period. The inertial data may be processed to determine an orientation and location of the walls relative to each other. Such devices are quicker to use and provide greater accuracy than the traditional methods discussed above. Documents EP 3527938 A1 and US 2014/0267717 A1 disclose measuring devices for determining the orientation and location of walls in a room.

For the avoidance of doubt, the term "wall" as used herein may encompass any internal surface of a room or other enclosed space and may, for example, encompass a wall, floor, ceiling, an internal face of a window or door opening and/or a stair riser or tread.

There is a desire to improve the accuracy and/or speed with which room openings may be identified and/or the internal dimensions and orientation of one or more walls of a room of a building may be measured.

### Summary

Methods and apparatus disclosed herein are directed to solving one or more problems in the prior art, including those disclosed herein.

According to the invention in a first aspect, there is provided a measuring device according to claim 1.

Optionally, the motion sensors comprise inertial sensors.

Optionally, the ranging direction is parallel to the body frame z-axis.

Optionally, the ranging module is configured to measure a plurality of distances to the second wall in a plurality of angularly offset ranging directions.

Optionally, the measuring device further comprises a range controller configured to control the ranging module to measure the distance to the second wall when the datum is positioned against the first wall.

Optionally, the range controller is configured to control the ranging module to measure the distance to the second wall based on data received from the motion sensors.

Optionally, the range controller is configured to control the ranging module to measure the distance to the second wall when the data received from the motion sensors indicates that the measuring device is stationary and/or when the datum is positioned against the first wall.

Optionally, the measuring device further comprises a proximity sensor configured to detect when the datum is positioned against the wall, and wherein the range controller is configured to control the ranging module to measure the distance to the second wall based on data received from the proximity sensor.

Optionally, the measuring device further comprises a confidence indicator configured to allow a user to indicate a confidence level in the distance measured by the ranging module.

Optionally, the confidence indicator comprises a button, depressible to indicate the user's confidence level.

The measuring device further comprises a data processor configured to: receive motion data from one or more of the motion sensors; process the motion data to determine a position and/or orientation of the first wall; receive ranging data from the ranging module; and process the ranging data to determine a position and/or orientation of the second wall, relative to the first wall.

The data processor is configured to: determine whether a position and/or orientation of the first wall has previously been determined based on first previous motion data and/or first previous ranging data; and wherein if the position and/or orientation of the first wall has previously been determined, the step of processing the motion data to determine the position and/or orientation of the first wall comprises combining the motion data with the first previous motion data and/or first previous ranging data.

The data processor is configured to: determine whether a position and/or orientation of the second wall has previously been determined based on second previous motion data and/or second previous ranging data; and wherein if the position and/or orientation of the second wall has previously been determined, the step of processing the ranging data to determine the position and/or orientation of the second wall comprises combining the ranging data with the second previous motion data and/or second previous ranging data.

Optionally, the data processor is configured to process the ranging data and process the motion data by combining a plurality of motion data and a plurality of ranging data to determine a best fit for the position and/or orientation of a plurality of walls of the room.

Optionally, combining the motion data and the ranging data is based on a weighted algorithm.

Optionally, the weighted algorithm comprises a least squares algorithm or a Kalman filter.

Optionally, a weighting of the motion data and/or a weighting of the ranging data is based on one or more of: an error in the motion data; an error in the ranging data; a predetermined weighting value for the motion data and/or the ranging data; an activation state of a confidence indicator; and a difference between a position and/or orientation of the device based on the ranging data and a position and/or orientation of the device based on the motion data.

Optionally, the data processor is configured, based on the motion data and/or the ranging data to recognise a sequence of relative positions and/or orientations of the measuring device, for identifying a feature and/or an opening in a wall of the room.

Optionally, the sequence is for identifying an opening, wherein the opening defines a reference frame comprising orthogonal x, y and z axes, wherein the reference frame x-axis is aligned with a width of the opening, the reference frame y-axis is aligned with a depth of the opening, and the reference frame z-axis is aligned with a vertical height of the opening, and wherein the sequence comprises at least two of: a first position in which the measuring device is vertically oriented; a second position in which the measuring device is horizontally oriented and linearly displaced in the reference frame x-axis with respect to the first position; and a third position in which the measuring device is vertically oriented, is linearly displaced in the reference frame x-axis with respect to the second position, and rotationally displaced by substantially 180 degrees about the reference frame z-axis or the reference frame y-axis with respect to the first position.

Optionally, the sequence comprises the first position and the third position.

Optionally, the sequence further comprises the second position.

Optionally, the sequence comprises the first position and the second position, and wherein the data processor is configured to identify the opening based at least on the ranging data.

Optionally, the type of opening is determined based on a vertical height of the second position.

Optionally, the sequence further comprises a reference position in which the measuring device is vertically oriented and, with respect to the first and/or third positions, is linearly displaced in the reference frame x-axis and rotated by substantially 90 degrees about the reference frame z-axis.

According to the invention in a further aspect, there is provided a method according to claim 11.

According to the invention in a further aspect, there is provided a computer program according to claim 12.

According to the invention in a further aspect, there is provided an apparatus according to claim 13.

According to the invention in a further aspect, there is provided a method according to claim 14.

According to the invention in a further aspect, there is provided a computer program according to claim 15.

Also disclosed herein is a measuring device for identifying one or more openings in a wall of a room, the measuring device comprising: a datum for positioning against a first wall of the room such that the measuring device has a known alignment and offset relative to the first wall; and a plurality of motion sensors configured to measure rotational and linear movement of the measuring device in a body frame comprising orthogonal x, y and z axes, wherein the body frame x-axis and body frame y-axis are parallel to a datum plane defined by the datum and the body frame z-axis is perpendicular to the datum plane; and a data processor configured, based on motion data received from the motion sensors to recognise a sequence of relative positions and/or orientations of the measuring device, for identifying a feature and/or an opening in a wall of the room.

Optionally, the sequence is for identifying an opening, wherein the opening defines a reference frame comprising orthogonal x, y and z axes, wherein the reference frame x-axis is aligned with a width of the opening, the reference frame y-axis is aligned with a depth of the opening, and the reference frame z-axis is aligned with a vertical height of the opening, and wherein the sequence comprises at least two of: a first position in which the measuring device is vertically oriented; a second position in which the measuring device is horizontally oriented and linearly displaced in the reference frame x-axis with respect to the first position; and a third position in which the measuring device is vertically oriented, is linearly displaced in the reference frame x-axis with respect to the second position, and rotationally displaced by substantially 180 degrees about a reference frame z-axis or the reference frame y-axis with respect to the first position.

Optionally, the sequence comprises the first position and the third position.

Optionally, the sequence further comprises the second position.

Optionally, the sequence comprises the first position and the second position, and wherein the data processor is configured to identify the opening based at least on the ranging data.

Optionally, the type of opening is determined based on a vertical height of the second position.

Optionally, the sequence further comprises a reference position in which the measuring device is vertically oriented and, with respect to the first and/or third positions, is linearly displaced in the reference frame x-axis and rotated by substantially 90 degrees about the reference frame z-axis.

Also disclosed herein is a method of identifying one or more openings in a wall of a room using a measuring device, the method comprising: positioning a datum of the measuring device against a first wall of the room such that the measuring device has a known alignment and offset relative to the first wall; measuring, by a plurality of motion sensors, rotational and linear movement of the measuring device in a body frame comprising orthogonal x, y and z axes, wherein the body frame x-axis and body frame y-axis are parallel to a datum plane defined by the datum and the body frame z-axis is perpendicular to the datum plane; and recognising, by a data processor and based on motion data received from the motion sensors, a sequence of relative positions and/or orientations of the measuring device, for identifying a feature and/or an opening in a wall of the room.

Also disclosed herein is a computer program configured, when executed on a computer processor, to control a measuring device to undertake the steps of measuring the rotational and linear movement of the measuring device in the body frame, and recognising the sequence in methods disclosed herein.

Also disclosed herein is an apparatus for processing data comprising a data processor configured to: receive motion data from one or more motion sensors of a measuring device, wherein the motion data is recorded when a datum of the measuring device is positioned against a plurality of walls of a room; process the motion data to determine a plurality of positions and/or orientations of the measuring device when the datum is positioned against the plurality of walls; recognise, within the plurality of positions and/or orientations of the measuring device, a sequence of relative positions and/or orientations of the measuring device, for identifying a feature and/or an opening in a wall of the room.

Also disclosed herein is a method of processing data comprising: receiving, from a measuring device, motion data from one or more motion sensors of the measuring device, wherein the motion data is recorded when a datum of the measuring device is positioned against a plurality of walls of a room; processing, by a data processor, the motion data to determine a plurality of positions and/or orientations of the measuring device when the datum is positioned against the plurality of walls; recognising, by the data processor, within the plurality of positions and/or orientations of the measuring device, a sequence of relative positions and/or orientations of the measuring device, for identifying a feature and/or an opening in a wall of the room.

Also disclosed herein is a computer program configured, when executed on a computer processor, to control a data processor to undertake the steps of methods disclosed herein.

### Brief description of the drawings

Embodiments of the disclosed methods and apparatus will be described in detail below, with reference to the accompanying drawings, in which:
Figure 1 is a schematic representation of a system for determining a location of one or more features of a room;
Figure 2 is a schematic representation of a measuring device;
Figure 3 is a schematic representation of a processing device;
Figure 4 is an isometric schematic representation of a measuring device;
Figure 5 is a plan view of a room;
Figure 6 is a plan view of a room;
Figure 7 is a flow diagram for a method of determining the relative locations of a plurality of walls of a room;
Figure 8 is a flow diagram for a method of determining the relative locations of a plurality of walls of a room;
Figure 9 is a side elevation view of a wall including a window opening; and
Figure 10 is a flow diagram for a method of determining a location and/or dimension of a wall opening.

### Detailed Description

Generally, disclosed herein are methods and apparatus for determining a location of a feature of an at least partially enclosed space, such as a room of a building. A feature may include a wall, floor, ceiling or wall opening, such as a door or window. The term "room" is used during the remainder of this detailed description but it will be understood that this need not be limiting and any space that is at least partially enclosed may be measured using the methods and apparatus disclosed. The methods and apparatus disclosed may determine the location and orientation of a wall or the location of a room opening. This may be done based on motion sensor (e.g. inertial sensor) data alone, a weighted combination of motion sensor data and ranging data and/or a sequence of relative positions and orientations of a measuring device.

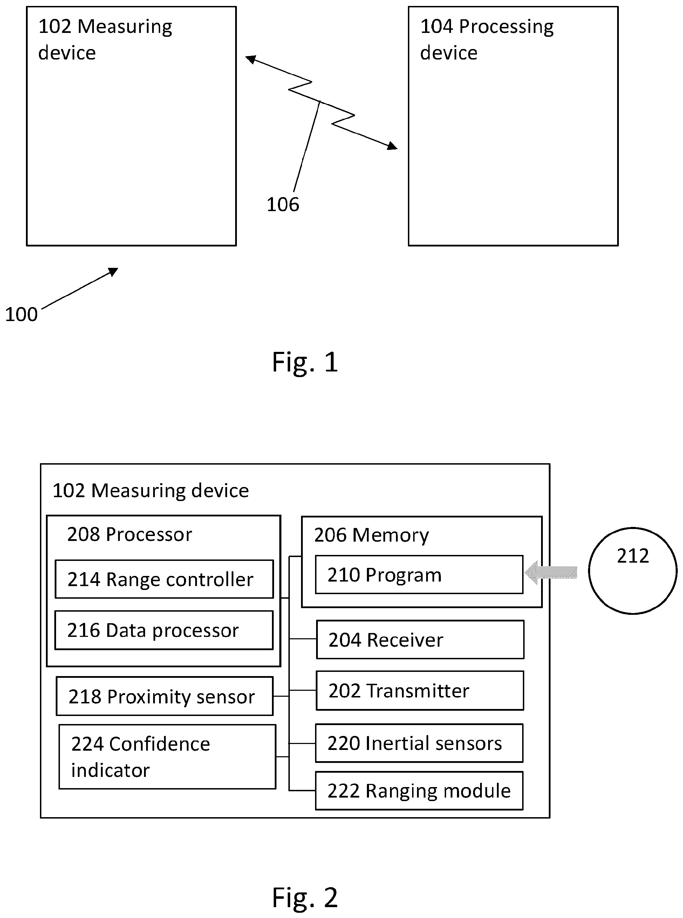

Figure 1 shows a schematic representation of a system for measuring features of a room. The system comprises a measuring device 102 and a processing device 104. Detailed descriptions of exemplary measuring and processing devices are given below. Broadly, the measuring device 102 comprises a plurality of sensors arranged to measure one or more features of a room and transmit data representing those measurements to the processing device 104. The processing device 104 includes a processor arranged to determine the location and orientation of walls and other features of the room based on the transmitted data.

It will be appreciated that at least part of the processing of the data representing the measurements may be undertaken at the measuring device 102 before transmission to the processing device 104. It will also be appreciated that the processing device 104 may form part of the measuring device 102 and they may be housed within a single unit.

The transmission of data from the measuring device 102 to the processing device 104 is shown in Figure 1 as a wireless transmission 106. The wireless transmission may be a radio frequency transmission using known hardware and communications protocols, such as Bluetooth (RTM), near field communication, Wi-Fi, network based communications (e.g. the internet) or mobile telecommunications protocols. The wireless transmission 106 may also use optical transmission hardware and protocols. The skilled person will appreciate that the transmission may be at least partially wired. The processing device 104 may also transmit data to the measuring device 102 via the same communications medium/protocol.

The transmission of data may be substantially in real time. For example, measurements may be recorded and data representing those measurements transmitted as soon as possible thereafter, e.g. on an open communications link. In some arrangements, the transmission of data may be intermittent and/or from time-to-time. For example, the measuring device may record a plurality of measurements and store data representing the plurality of measurements for transmission at a later time. In such arrangements, the transmission may be triggered manually, or may be triggered by the measuring device 102 detecting an open communication channel (either direct or indirect) to the processing device 104.

Figure 2 shows a schematic representation of a measuring device 102, which may be the measuring device 102 in Figure 1. The measuring device 102 comprises a transmitter 202 and, optionally, a receiver 204. The transmitter 202 and receiver 204 may be in data communication with other entities, such as processing device 104 or servers and/or functions in a telecommunications network, and are configured to transmit and receive data accordingly.

The measuring device 102 further comprises a memory 206 and a processor 208. The memory 206 may comprise a non-volatile memory and/or a volatile memory. The memory 206 may have a computer program 210 stored therein. The computer program 210 may be configured to undertake the methods disclosed herein. The computer program 210 may be loaded in the memory 206 from a non-transitory computer readable medium 212, on which the computer program is stored. The processor 208 is configured to undertake one or more of the functions of a range controller 214 and a data processor 216, as set out below. The measuring device may also comprise a proximity sensor 218, inertial sensors 220, a ranging module 222 and a confidence indicator 224.

The inertial sensors 220 may comprise accelerometers and/or rate gyros. The inertial sensors 220 may be arranged to measure acceleration and rotational velocity of the measuring device 102 in three orthogonal axes, typically identified as x-axis, y-axis and z-axis. The accelerations and rotational velocities may be recorded in a body frame (i.e. a frame fixed in relation to the measuring device 102 and defined by x, y and z axes) and converted to any other reference frame (e.g. a local reference frame based on the room) using well known techniques. The inertial sensors 220 may form part of an Inertial Measurement Unit (IMU). The inertial sensors may incorporate micro-electro-mechanical systems (MEMS) technology.

Throughout this document, inertial sensors are referred to, although it should be understood that other motion sensors may be employed. Such motion sensors include any sensor that is able to detect rotational and/or linear movement of the measuring device.

The ranging module 222 is configured to determine a range from the measuring device 102 to a remote object, such as a wall of a room. The ranging module 222 may comprise one or more distance measuring tools. In some arrangements, the ranging module may comprise a laser distance measurement (LDM) tool. The LDM may be configured to transmit laser light from the measuring device 102, receive reflected laser light reflected from a remote object and determine a distance from the measuring device 102 to the remote object using known techniques. The laser light may be in the visible or non-visible spectrum. The ranging module may comprise other types of ranging tools, such as acoustic ranging tools or 3D laser scanning tools, such as LiDAR.

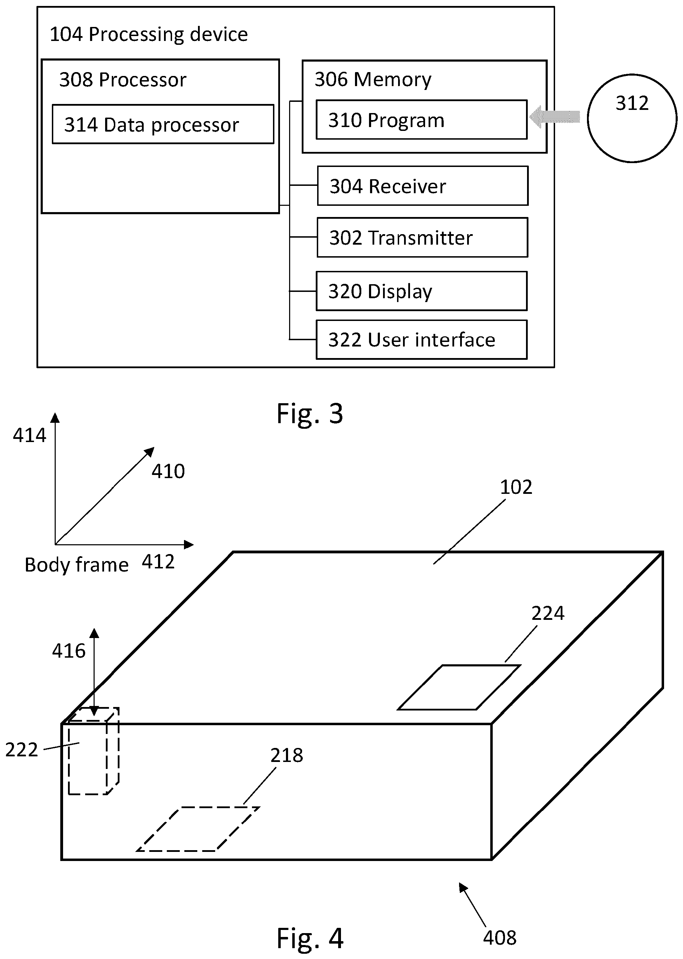

As described below with reference to Figure 4, the ranging module 222 may be oriented to determine a range to a remote object in one or more directions from the measuring device 102. The measuring device may comprise a plurality of ranging modules 222 oriented in different directions.

The proximity sensor 218 is configured to provide an indication when a surface of the measuring module 102 is placed against a wall or other flat surface. The proximity sensor may take any form and in exemplary arrangements may comprise a light sensor. When the measuring device is placed against the wall, the light sensor may be covered, thereby preventing light from entering and providing the necessary indication.

Each of the transmitter 202 and receiver 204, memory 206, processor 208, proximity sensor 218 inertial sensors 220 and ranging module 222 is in data communication with the other features of the measuring device 102. The measuring device 102 can be implemented as a combination of hardware and software. In particular, the range controller 214, and data processor 216 may be implemented as software configured to run on the processor 208. The memory 206 stores the various programs/executable files that are implemented by a processor 208, and also provides a storage unit for any required data. The programs/executable files stored in the memory 206, and implemented by the processor 208, can include the range controller 214 and data processor 216, but are not limited to such.

Figure 3 shows a schematic representation of a processing device 104, which may be the processing device 104 in Figure 1. The processing device 104 comprises a receiver 304 and optionally a transmitter 302. The transmitter 302 and receiver 304 may be in data communication with other entities, such as measuring device 102 or servers and/or functions in a telecommunications network, and are configured to transmit and receive data accordingly.

The processing device 104 further comprises a memory 306 and a processor 308. The memory 306 may comprise a non-volatile memory and/or a volatile memory. The memory 306 may have a computer program 310 stored therein. The computer program 310 may be configured to undertake the methods disclosed herein. The computer program 310 may be loaded in the memory 306 from a non-transitory computer readable medium 312, on which the computer program is stored. The processor 308 is configured to undertake, the functions of a data processor 314, as set out below. The processing device 104 also optionally comprises a display 320 and a user interface 322.

Each of the transmitter 302 and receiver 304, memory 306, processor 308, display 320 and user interface 322 is in data communication with the other features of the processing device 104. The processing device 104 can be implemented as a combination of hardware and software. In particular, the data processor 314 may be implemented as software configured to run on the processor 308. The memory 306 stores the various programs/executable files that are implemented by a processor 308, and also provides a storage unit for any required data. The programs/executable files stored in the memory 306, and implemented by the processor 308, can include the data processor 314, but are not limited to such.

Figure 4 shows an isometric schematic view of a housing of an exemplary measuring device 102. The exemplary measuring device of Figure 4 has a generally flattened rectangular shape, but other shapes of measuring device are possible. The housing of the measuring device 102 has at least one datum, which in this case is a flat surface 408, configured to be positioned flush against a wall of a room. A body frame of the measuring device 102 may therefore be defined based on the arrows 410, 412 and 414 in Figure 4, where 410 is the x-axis, 412 is the y-axis and 414 is the z-axis. The flat surface 408 is a datum that provides a known alignment and offset of the measuring device 102 with respect to the wall. In the case of the flat surface 408, the measuring device 102 is aligned with the wall and the offset is substantially zero. However, other datums may be used such as, for example, a plurality of legs or pegs, say in a tripod formation.

In one exemplary arrangement, the ranging module 222 is configured to measure a distance to a remote object in a direction 416, which is parallel to the z-axis 414. That is, the ranging module 222 is configured to measure a distance to a remote object in a direction transverse, and in specific arrangements perpendicular to, the surface 408. Therefore, when the measuring device 102 has the surface 408 held flush against a wall of a room, the ranging module 222 is able to measure a distance to an opposite wall. In other arrangements, the ranging module 222 may be configured to measure a distance to a remote object that is parallel to either of the x-axis 410 and the y-axis 412, or indeed in any other direction.

In some arrangements, the ranging module may be configured to measure a plurality of distances to a remote object that are angularly offset. The plurality of distances may all be in a ranging plane passing through the direction 416 or may be at any angle from the direction 416. The plurality of distances may be measured in a scan pattern within the plane or multiple planes. The plurality of distances may form a fan or cone shape. The plurality of distances may provide information on the orientation of the measuring device 102 relative to the remote object, e.g. one or more walls substantially opposite the wall that the measuring device 102 is placed against.

The measuring device may include a confidence indicator 224 configured to allow a user of the measuring device 102 to indicate a confidence in the distance measurement obtained by the ranging module. In the exemplary measuring device 102 shown in Figure 4 the confidence indicator 224 comprises a button that the user may depress if they have confidence in the distance measurement of the ranging module 222. For example, if a user notices that the ranging module is not measuring a distance to an opposite wall, but is instead measuring a distance to a window, item of furniture or the like, they may choose not to activate the confidence indicator 224, e.g. not depress the button. If the user notices that the ranging module is measuring a true distance to an opposite wall then they may activate the confidence indicator 224, e.g. depress the button. In some arrangements the confidence indicator 224 may be activated by another means, such as voice activation. Alternatively, the confidence indication may be provided by the user after the measurement is made by the ranging module 222, such as during or after processing of the data.

The confidence indicator 224 may also be used to confirm that the opposite wall is indeed parallel to the wall that the surface 408 is positioned against. Alternatively, a separate indicator, a parallel indicator, which may also be a depressible button may be included for that purpose.

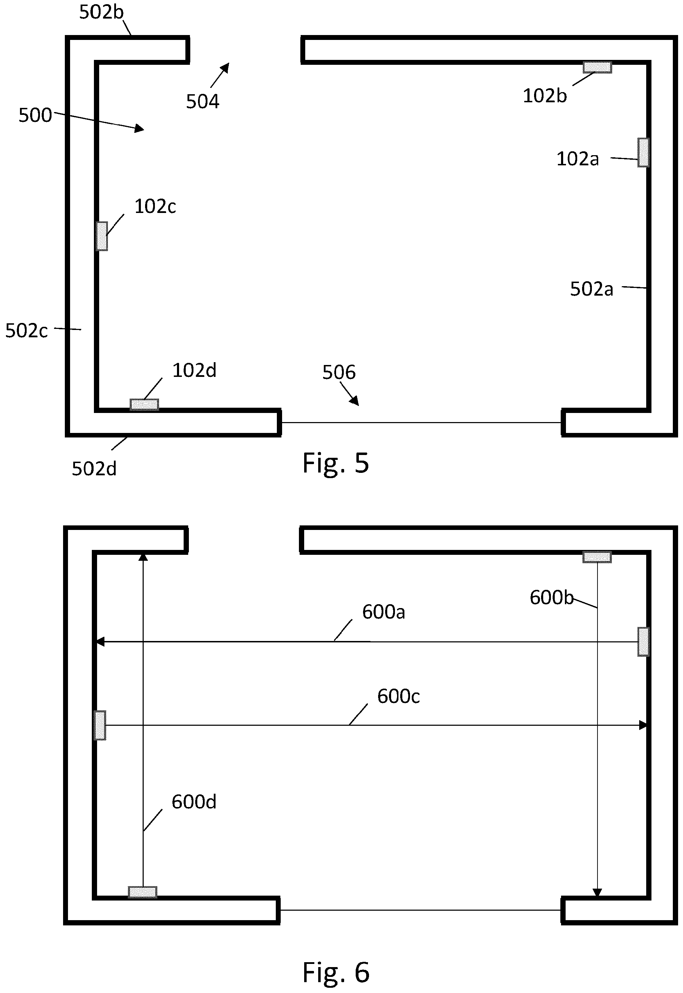

Figure 5 shows a plan view of an exemplary room 500 of a building. The room 500 comprises four walls 502a, 502b, 502c and 502d. A door opening 504 is located in wall 502b, and a window opening 506 is located in wall 502d.

Using measuring devices 102 without a ranging module 222, the surface 408 of the measuring device 102 is placed on each wall in turn. This is shown by measuring devices 102a, 102b, 102c and 102d. As a further accuracy measure, the measuring device 102 may be placed again at location 102a (or another location on wall 502a) after it has been placed at location 102d. This can provide information about the level of drift in the inertial sensors 220 over the time it has taken to place the measuring device 102 on each wall 502a, 502b, 502c and 502d.

The data processor 216 of the measuring device 102 or 314 of the processing device 104 processes the inertial data from the inertial sensors 220 to detect when the measuring device 102 is stationary at each location 102a, 102b, 102c and 102d. This may be achieved by determining whether the outputs from the inertial sensor are below one or more threshold values for a given period of time.

When the data processor 216, 314 detects that the measuring device 102 is stationary against a wall, the processor 216, 314 determines the wall 502a location to be coincident with the surface 408. The measuring device 102 is moved from position 102a to 102b, the data processor 216, 314 receives inertial data indicating that the measuring device 102 is once again stationary. The data processor 216, 314 therefore determines a position and orientation of the adjacent wall 502b relative to the first wall 502a. The two walls 502a and 502b can be represented as planes that intersect each other based on the determined relative orientation and position.

The process is repeated for walls 502c and 502d and the data processor receives the inertial data to complete a plan of the walls of the room.

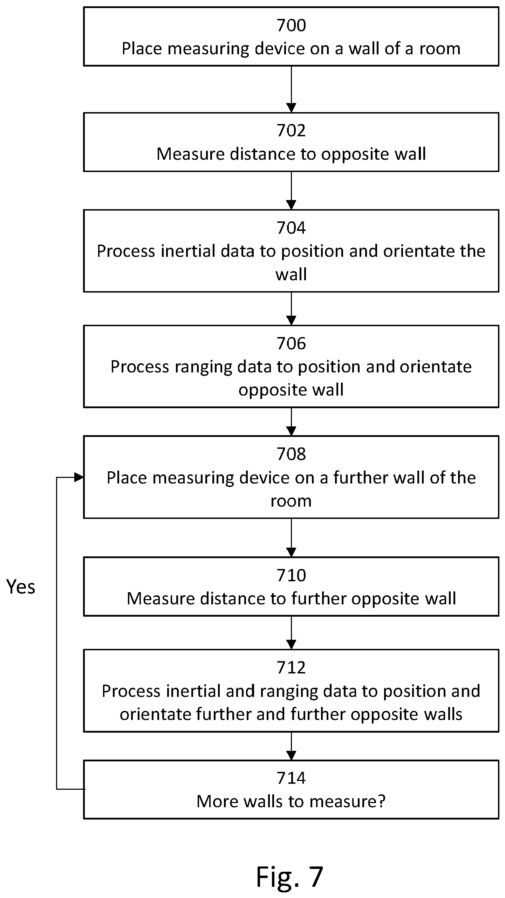

Referring to Figures 6 and 7, a method for determining a location of one or more features of a room is described below. The features of the room may comprise walls, floors, room openings, such as windows and doors. Like features of Figure 6 are given the same reference numeral as in Figure 5 and are not described again. The example described below is that of the measuring device 102 measuring data, transmitting that data to the processing device 104 where it is processed to determine the location and/or dimensions of features. It will be appreciated that in other arrangements at least part, and in some cases all, of the recorded data may be processed at the measuring device 102. The processed data can be transmitted by the measuring device 102, for example to a display unit or uploaded to a network server.

The measuring device 102 is placed 700 against the wall 502a at the location 102a. The surface 408 of the measuring device 102 is placed flush against the wall 502a.

The range controller 214 controls the ranging module 222 to measure 702 a distance to the wall 502c. This is represented by the arrow 600a. The range controller 214 may control the range module 222 to measure the distance when the surface 408 is flush against the wall 502a. The data processor 216 of the measuring device 102 may be configured to detect when the measuring device 102 is held against the wall 502a and may trigger the range controller 214 based on that detection. In some arrangements, the proximity sensor 218 may detect when the surface 408 is positioned against the wall 502a and may trigger the range controller 214 based on that detection. Alternatively or in addition, the data processor 216, 314 may determine that the measuring device 102 is stationary, as described herein.

In exemplary arrangements, the range controller 214 may control the range module 222 to take a plurality of measurements of the distance to an opposite wall 502c. The data processor 216, 314 may determine the correct distance measurement based on the plurality of measurements. For example, if a plurality of consistent distance measurements (e.g. within a tolerance) are achieved then the average of those measurements may be considered to be the distance measurement.

In exemplary arrangements, inertial data measured by the inertial sensors 220 is transmitted to the processing device 104. The data processor 314 processes 704 the inertial data to determine a position of the wall 502a. The position of the wall 502a may be determined to be coincident with the position of the surface 408. The orientation of the wall 502a may be determined to be the same as the orientation of the measurement device 102 (e.g. the surface 408).

Ranging data measured by the ranging module 222 and indicative of the distance 600a to the wall 502c is transmitted to the processing device 104. The data processor 314 processes 706 the ranging data to determine a position of the wall 502c. The position of the wall 502c may be determined to be offset from the wall 502a by the distance 600a. If no data relating to orientation (either inertial or ranging data) is available then the orientation of the wall 502c may be determined to be parallel to the wall 502a.

In the example shown in Figure 6, the distance 600a is measured to the opposite wall 502c. The user may therefore use the confidence indicator 224 to indicate that they have confidence in the range measurement 600a. In other circumstances, if the range measurement had hit the door opening 504, the window opening 506 or some furniture in the room then the user may indicate a low confidence in the range measurement.

The measuring device 102 is placed 708 on the wall 502b. The inertial sensors 220 detect a rotation has occurred and that the measuring device 102 is now stationary. In a similar way to that described above, the range controller 214 controls the ranging module 222 to measure 710 a distance 600b to the wall 502d.

In the arrangement described, the corresponding inertial data is transmitted to the processing device 104 and the data processor 314 processes 712 that inertial data to determine a position and orientation of the wall 502b. The position of the wall 502b may be determined to be coincident with the position of the surface 408. The orientation of the wall 502b may be determined to be the same as the orientation of the measurement device 102 (e.g. the surface 408).

Ranging data measured by the ranging module 222 and indicative of the distance 600b to the wall 502d is, in this example, transmitted to the processing device 104. The data processor 314 processes 712 the ranging data to determine a position of the wall 502d. The position of the wall 502d is determined to be offset from the wall 502b by the distance 600b. If no data relating to orientation (either inertial or ranging data) is available then the orientation of the wall 502d may be determined to be parallel to the wall 502b.

In some arrangements, this may be sufficient to position all four walls 502a, 502b, 502c and 502d of the room 500 with enough accuracy. In other arrangements, more walls may be measured 714 to improve the accuracy with which the walls are positioned. For example, the measuring device 102 may be placed at position 102c on wall 502c, and at position 102d on wall 502d. In a similar way to that described above, the measuring device may record inertial data relating to the position and orientation of walls 502c and 502d, and ranging data relating to the position of walls 502a and 502b. This generates a plurality of data relating to the position and orientation of each of the walls 502a, 502b, 502c and 502d. All of this data may be combined using methods and apparatus disclosed herein to determine a best fit for the position and orientation of each wall 502a, 502b, 502c and 502d.

In some arrangements, the ranging module 222 may be configured to measure a plurality of distances to a wall. The plurality of distances may be angularly offset from one another as described above. Accordingly, the ranging module may record data that indicates an orientation of an opposite wall relative to a wall on which the measuring device 102 is positioned. In such arrangements, the position and orientation of the opposite wall may be determined by the data processor 216, 314 based on the ranging data.

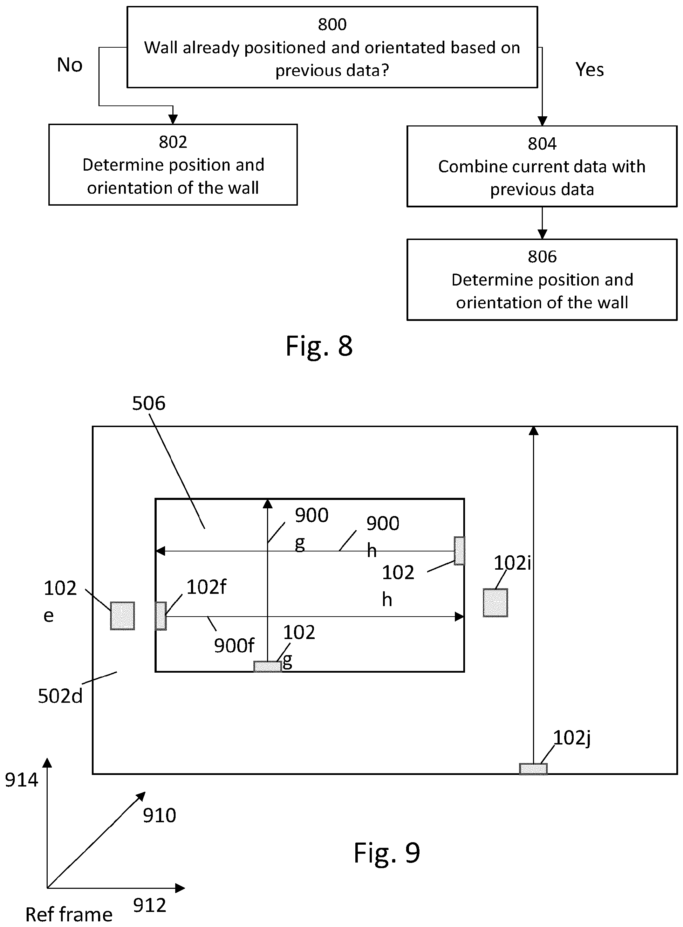

Figure 8 shows a flow diagram for a method of processing inertial data and/or ranging data to determine the position and/or orientation of a wall. The data processor 216, 314 receives the inertial and/or ranging data relating to a wall 502a, 502b, 502c and 502d and determines 800 whether a position and/or orientation for the wall has been previously determined.

If no position and/or orientation for the wall has previously been determined then the data processor 216, 314 determines 802 a position and/or orientation for the wall based on the received inertial and/or ranging data. This is described above. If a position and/or orientation for the wall has previously been determined then the data processor 314 combines 804 the received inertial and/or ranging data (the current inertial and/or ranging data) with the inertial and/or ranging data used to determine the previous position of the wall (the previous inertial and/or ranging data).

Combining the previous and current inertial and/or ranging data may be done using a weighted algorithm, for example a weighted average algorithm. In exemplary arrangements, the combination of the previous and current inertial and/or ranging data may be based on a least squares algorithm (e.g. a weighted least squares algorithm) or a Kalman filter algorithm. In such examples, the relative weight given to the previous inertial data, previous ranging data, current inertial data and/or current ranging data may be determined based on an estimated accuracy of that data.

For example, if errors in the inertial data (previous and/or current) are determined to be high then the weighting applied to the inertial data may be low, and vice-versa. Also, if the confidence in the ranging data (previous and/or current) is determined to be low then the weighting applied to the ranging data may be low, and vice-versa. The confidence in the ranging data may be determined based on whether the user has activated the confidence indicator. In some arrangements, the confidence in the ranging data may be determined based on a difference between a position and/or orientation determined based on the ranging data and a position and/or orientation determined based on the motion data. If the difference is above a threshold then the ranging data may be considered inaccurate and given a low weighting, or discounted entirely. If the difference is equal to or below the threshold then the ranging data is considered to be a true range and may then be given a high weighting, and in some cases the inertial data may be discounted entirely. In some arrangements, the weighting of the inertial and/or ranging data (previous and/or current) may be predetermined and stored in the memory 306. For example, the predetermined weights may be based on predetermined error ranges for the inertial sensors and/or the ranging module. These may be obtained from the manufacturers or through testing and calibration. The weightings may also be based on environmental conditions, such as temperature, pressure etc.

Based on the combination of the previous and current inertial and/or ranging data, the data processor 216, 314 determines 806 a best fit position and/or orientation of the wall.

When methods based on Figure 8 are used then the accuracy of the positions and orientations of the walls 502a, 502b, 502c and 502d is increased.

In exemplary arrangements, the inertial sensors 220 may be calibrated based on the ranging data. That is, when the measurement device 102 is placed on a wall that has already been positioned and/or oriented using ranging data the ranging data may be used to correct errors in the inertial sensor measurements. In a specific example, if a previous position and/or orientation of a wall determined based on previous ranging data is within a threshold value of a position and/or orientation of the wall determined based on current inertial data, e.g. when the measurement device 102 is positioned on the wall, the ranging data may be considered to be a true range. In that circumstance, the ranging data is a more accurate measure of position and/or orientation of the wall. The ranging data may therefore be used, e.g. in a weighted algorithm such as that mentioned above, to correct errors in the inertial sensor measurements. Such corrections may be done by the data processor 216, 314 'on-the-fly' as the measuring device 102 is positioned at locations around a room. Alternatively, or in addition, the corrections may be applied by the data processor 216, 314 in a post-processing algorithm after all measurements have been taken. Alternatively, or in addition, the calibration of the inertial sensors can be improved, based on the ranging data, such that future measurements using only the inertial data, when ranging data is not available, are also improved.

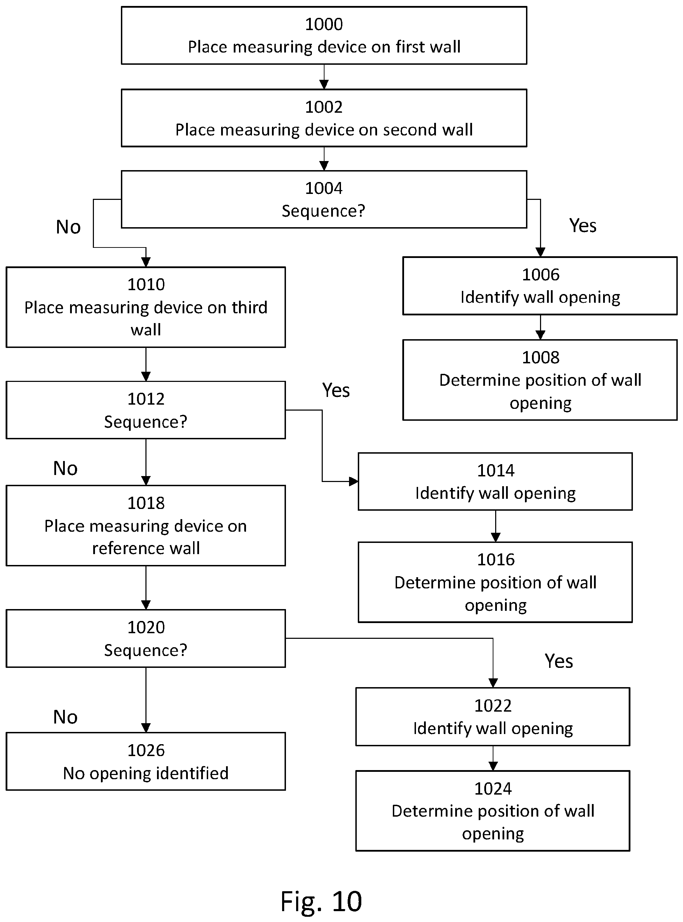

Figures 9 and 10 show a method of identifying a feature of a room, in this case a window opening, and/or determining a position of the feature. The method described below may be used in addition to the methods described above, or may be used in isolation. Also, as will become apparent, the method of Figure 10 need not use a ranging module 222. Therefore, the measuring device 102 used in the method of Figure 10 may comprise the measuring device 102 of Figures 2 and 4 but without the ranging module 222 and the confidence indicator 224.

Figure 9 shows a reference frame comprising three orthogonal axes. A y-axis 910 is parallel to a depth of the window 506, an x-axis 912 is parallel to a width of the window 506, and a z-axis 914 is parallel to a vertical height of the window 506.

The data processor 216, 314 is configured to recognise a sequence of positions of the measuring device 102 and identify the sequence as a feature, such as an internal room feature, and/or an opening 506 in a wall 502d. The opening 506 may be a window, door or other opening in any surface of a room. The data processor 216, 314 may be configured to identify the opening 506 based on inertial data and/or ranging data.

The sequence recognised by the data processor may include two or more of: a first position in which the measuring device 102 is vertically oriented (e.g. position 102f); a second position in which the measuring device 102 is horizontally oriented and linearly displaced in the reference frame x-axis 912 with respect to the first position (e.g. position 102g); and a third position in which the measuring device 102 is vertically oriented, is linearly (and optionally further linearly) displaced in the reference frame x-axis 912 with respect to the second position, and rotationally displaced by substantially 180 degrees about the reference frame z-axis or the reference frame y-axis with respect to the first position (e.g. position 102h).

The term 'vertically oriented' encompasses a measuring device 102 that is positioned against a vertical wall or room feature. The term 'horizontally oriented' encompasses a measuring device 102 that is positioned against a horizontal wall or room feature. Further, the rotations and displacements discussed relate to the angle and displacement between one position and another position, which may be determined as mentioned above using proximity indicator 218 and/or the stationary algorithm for the measurement device 102. Any amount of rotation and displacement in any direction may occur between those positions.

Referring to Figure 10, the measuring device 102 is placed 1000 flush against a first wall. It is noted again here that the term wall may encompass an internal face of an opening in a wall and a sill or upper surface of such an opening. In accordance with the methods above, the position and orientation of the first wall may be determined. This may be done using inertial data only, as described in reference to Figure 5, or may incorporate ranging data as described in relation to Figures 6 and 7.

The measuring device 102 is placed 1002 against a second wall. In accordance with the methods above, the position and orientation of the second wall may be determined by the data processor 216, 314. Again, this may be done using inertial data only, as described in reference to Figure 5, or may incorporate ranging data as described in relation to Figures 6 and 7.

The data processor 216, 314 determines 1004 whether the measuring device has been placed in a sequence that it can recognise, e.g. that is stored in memory 206, 306.

If a sequence is recognised then an opening 506 is identified 1006 and the position and/or dimensions of the opening are determined 1008 by the data processor 216, 314 based on recorded inertial and/or ranging data. In one arrangement, the sequence may include the first position and the third position. That is, the measuring device 102 may have been placed at positions 102f and 102h. These positions may be determined based on inertial data and/or ranging data. That is, they may be determined based on inertial data alone. In another arrangement, the sequence may include the first position and the second position. That is, the measuring device 102 may have been placed at positions 102f and 102g. These positions may be determined based on inertial data and/or ranging data. The ranging data 900f recorded when the measuring device 102 was in position 102f may be used by the data processor 216, 314 to determine the position and/or orientation of wall on the opposite side of the opening. The ranging data 900g recorded when the measuring device 102 was in position 102g may be used by the data processor 216, 314 to determine the position and/or orientation of an upper wall of the opening.

If no sequence is detected by the data processor 216, 314 then placement of the measuring device 102 may continue to a third wall 1010.

The data processor 216, 314 again determines 1012 whether the measuring device has been placed in a sequence that it can recognise.

If a sequence is recognised then an opening 506 is identified 1014 and the position and/or dimensions of the opening are determined 1016 by the data processor 216, 314 based on recorded inertial and/or ranging data. In one arrangement, the sequence may include the first position, second position and the third position. That is, the measuring device 102 may have been placed at positions 102f, 102g and 102h. These positions may be determined based on inertial data and/or ranging data. That is, they may be determined based on inertial data alone. The measuring device 102 may be placed in the first, second and third positions in any order. The second position may, in some arrangements, be the upper wall of the opening 506. In arrangements incorporating the ranging module 222, the ranging data 900f, 900g and 900h recorded when the measuring device 102 was in positions 102f, 102g and 102h may be used by the data processor 216, 314 in combination with the inertial data to determine the position and/or orientation of internal walls on the opening 506.

In some arrangements, the sequence may include one or more reference positions. The reference positions may include positioning the measuring device on the face of the wall in which the opening is made. For example, the reference positions may include one or more of the positions 102e and 102i on the wall 502d including the opening 506. The reference positions 102e, 102i may be linearly displaced from the first and/or third positions 102f, 102h in the reference frame x-axis, and/or may be rotated by substantially 90 degrees with respect to the first and third positions 102f, 102h about the reference frame z-axis 914. Accordingly, the sequence may comprise one or more reference positions, and two or more of the first, second and third positions.

If no sequence is identified at step 1012 then the data processor 216, 314 may determine placement of the measuring device 102 on a fourth wall 1018. If the fourth wall is a reference position 102e and 102i then the sequence may be recognised at step 1020. The opening 506 is identified 1022 and the position and/or dimensions of the opening are determined 1024 by the data processor 216, 314 based on recorded inertial and/or ranging data, as set out above. It is noted again that the reference positions may be used in conjunction with any two or more of the first, second and third positions.

In exemplary arrangements, an opening may be identified as a window or a door based on a height of the second position relative to a floor of the room. Accordingly, the sequence may include a floor position, in which the measuring device 102 is placed on the floor, for example at position 102j. The floor position may be used in a sequence including the second position. Accordingly, if the floor position is determined to be substantially the same height as the second position then the data processor 216, 314 may determine that the opening is a door. If the floor position is determined to be higher than the second position by a distance greater than or equal to a threshold then the data processor 216, 314 may determine that the opening is a window. The height of the window sill from the floor may be determined by the data processor 216, 314 in this way.

The first, second, third, reference and floor positions may occur in any order in any sequence. Further, other measurements may be taken in between the measurements taken at the first, second, third, reference and floor positions.

At least part, and optionally all, of the function of the data processor 314 of the processing device 104 described above may be undertaken by the data processor 216 of the measuring device 102.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

It will be apparent to those skilled in the art that various modifications and variations can be made to the disclosed systems and methods. Other embodiments will be apparent to those skilled in the art from consideration of the specification and practice of the disclosed systems and methods. It is intended that the specification and examples be considered as exemplary only, with a true scope being indicated by the following claims and their equivalents.

## Claims

1. A measuring device (102) for determining a position and/or orientation of one or more walls of a room, the measuring device comprising:
a datum for positioning against a first wall of the room such that the measuring device has a known alignment and offset relative to the first wall;
a plurality of motion sensors (220) configured to measure rotational and linear movement of the measuring device in a body frame comprising orthogonal x, y and z axes, wherein the body frame x-axis and body frame y-axis are parallel to a datum plane defined by the datum and the body frame z-axis is perpendicular to the datum plane; and
a ranging module (222) configured to measure a distance from the first wall to a second wall in a ranging direction parallel to or transverse to the datum plane; and
a data processor (208) configured to:
receive motion data from one or more of the motion sensors when the datum is positioned against the first wall;
process the motion data to determine a position and/or orientation of the first wall;
receive ranging data from the ranging module indicative of the distance from the first wall to the second wall; and
process the ranging data to determine a position and/or orientation of the second wall,
the data processor being further configured to:
determine whether a position and/or orientation of one or both of the first wall and the second wall has previously been determined based on previous motion data and/or previous ranging data; and
if the position and/or orientation of one or both of the first wall and the second wall has previously been determined, combine one or both of the motion data and the ranging data with the previous motion data and/or previous ranging data.

2. The measuring device of claim 1, wherein the motion sensors comprise inertial sensors, and/or wherein the ranging direction is parallel to the body frame z-axis.

3. The measuring device of any preceding claim, wherein the ranging module is configured to measure a plurality of distances to the second wall in a plurality of angularly offset ranging directions.

4. The measuring device of any preceding claim, further comprising a range controller (214) configured to control the ranging module to measure the distance to the second wall when the datum is positioned against the first wall.

5. The measuring device of claim 4, wherein the range controller is configured to control the ranging module to measure the distance to the second wall based on data received from the motion sensors.

6. The measuring device of claim 5, wherein the range controller is configured to control the ranging module to measure the distance to the second wall when the data received from the motion sensors indicates that the measuring device is stationary and/or when the datum is positioned against the first wall.

7. The measuring device of any of claims 4 to 6, further comprising a proximity sensor (218) configured to detect when the datum is positioned against the wall, and wherein the range controller is configured to control the ranging module to measure the distance to the second wall based on data received from the proximity sensor.

8. The measuring device of any preceding claim, wherein the data processor is configured to process the ranging data and process the motion data by combining a plurality of motion data and a plurality of ranging data to determine a best fit for the position and/or orientation of a plurality of walls of the room.

9. The measuring device of any of claims 6 to 8, wherein combining the motion data and the ranging data is based on a weighted algorithm, and optionally wherein the weighted algorithm comprises a least squares algorithm or a Kalman filter.

10. The measuring device of claim 9, wherein a weighting of the motion data and/or a weighting of the ranging data is based on one or more of: an error in the motion data; an error in the ranging data; a predetermined weighting value for the motion data and/or the ranging data; an activation state of a confidence indicator; and a difference between a position and/or orientation of the device based on the ranging data and a position and/or orientation of the device based on the motion data.

11. A method of determining a position and/or orientation of one or more walls of a room using a measuring device, the method comprising:
positioning (700) a datum of the measuring device against a first wall of the room such that the measuring device has a known alignment and offset relative to the first wall;
measuring, by a plurality of motion sensors, rotational and linear movement of the measuring device in a body frame comprising orthogonal x, y and z axes, wherein the body frame x-axis and body frame y-axis are parallel to a datum plane defined by the datum and the body frame z-axis is perpendicular to the datum plane; and
measuring (702), by a ranging module, a distance from the first wall to a second wall in a ranging direction parallel to or transverse to the datum plane;
receiving, at a data processor, motion data from one or more of the motion sensors when the datum is positioned against the first wall;
processing (704), at the data processor, the motion data to determine a position and/or orientation of the first wall;
receiving, at the data processor, ranging data from the ranging module indicative of the distance from the first wall to the second wall; and
processing (706), at the data processor, the ranging data to determine a position and/or orientation of the second wall;
determining (800), by the data processor, whether a position and/or orientation of one or both of the first wall and the second wall has previously been determined based on previous motion data and/or previous ranging data; and
if the position and/or orientation of one or both of the first wall and the second wall has previously been determined, combining (804), by the data processor, one or both of the motion data and the ranging data with the previous motion data and/or previous ranging data.

12. A computer program configured, when executed on a computer processor, to control the computer processor to undertake the steps of claim 11.

13. An apparatus (104) for processing data comprising a data processor (314) configured to:
receive motion data from one or more motion sensors (220) of a measuring device (102);
process the motion data to determine a position and/or orientation of a first wall;
receive ranging data from a ranging module (222) of the measuring device;
process the ranging data to determine a position and/or orientation of a second wall;
determine whether a position and/or orientation of one or both of the first wall and the second wall has previously been determined based on previous motion data and/or previous ranging data; and
if the position and/or orientation of one or both of the first wall and the second wall has previously been determined, combine one or both of the motion data and the ranging data with the previous motion data and/or previous ranging data.

14. A method of processing data comprising:
receiving, from a measuring device, motion data from one or more motion sensors of the measuring device;
processing (704), by a data processor, the motion data to determine a position and/or orientation of a first wall;
receiving, from the measuring device, ranging data from a ranging module of the measuring device;
processing (706), by the data processor, the ranging data to determine a position and/or orientation of a second wall;
determining (800), by the data processor, whether a position and/or orientation of one or both of the first wall and the second wall has previously been determined based on previous motion data and/or previous ranging data; and
if the position and/or orientation of one or both of the first wall and the second wall has previously been determined, combining (804), by the data processor, one or both of the motion data and the ranging data with the previous motion data and/or previous ranging data.

15. A computer program configured, when executed on a computer processor, to control the computer processor to undertake the steps of the method of claim 14.

## Patentansprüche

1. Messvorrichtung (102) zum Bestimmen einer Position und/oder Ausrichtung von einer oder mehreren Wänden eines Raums, die Messvorrichtung umfassend:
eine Bezugshöhe zum Positionieren an einer ersten Wand des Raums, so dass die Messvorrichtung eine bekannte Ausrichtung und einen bekannten Versatz relativ zu der ersten Wand aufweist;
eine Vielzahl von Bewegungssensoren (220), die konfiguriert sind, um eine Dreh- und Linearbewegung der Messvorrichtung in einem Körperrahmen zu messen, umfassend orthogonale x-, y- und z-Achsen, wobei die x-Achse des Körperrahmens und die y-Achse des Körperrahmens parallel zu einer Bezugsebene sind, die durch die Bezugshöhe definiert ist, und die z-Achse des Körperrahmens senkrecht zu der Bezugsebene ist; und
ein Entfernungsmessungsmodul (222), das dazu konfiguriert ist, einen Abstand von der ersten Wand zu einer zweiten Wand in einer Entfernungsmessungsrichtung parallel zu oder quer zu der Bezugsebene zu messen; und
einen Datenprozessor (208), der zu Folgendem konfiguriert ist:
Empfangen von Bewegungsdaten von einem oder mehreren der Bewegungssensoren, wenn die Bezugshöhe gegen die erste Wand positioniert ist;
Verarbeiten der Bewegungsdaten, um eine Position und/oder Ausrichtung der ersten Wand zu bestimmen;
Empfangen von Entfernungsmessungsdaten von dem Entfernungsmessungsmodul, die für den Abstand von der ersten Wand zu der zweiten Wand angebend sind; und
Verarbeiten der Entfernungsmessungsdaten, um eine Position und/oder Ausrichtung der zweiten Wand zu bestimmen,
wobei der Datenprozessor ferner zu Folgendem konfiguriert ist:
Bestimmen, ob eine Position und/oder Ausrichtung von einer oder beiden von der ersten Wand und der zweiten Wand zuvor auf Grundlage früherer Bewegungsdaten und/oder früherer Entfernungsmessungsdaten bestimmt wurde; und
falls die Position und/oder Ausrichtung von einer oder beiden von der ersten Wand und der zweiten Wand zuvor bestimmt wurde, Kombinieren von einer oder beiden von den Bewegungsdaten und den Entfernungsmessungsdaten mit den vorherigen Bewegungsdaten und/oder vorherigen Entfernungsmessungsdaten.

2. Messvorrichtung nach Anspruch 1, wobei die Bewegungssensoren Trägheitssensoren umfassen und/oder wobei die Entfernungsmessungsrichtung parallel zu der z-Achse des Körperrahmens ist.

3. Messvorrichtung nach einem der vorhergehenden Ansprüche, wobei das Entfernungsmessungsmodul konfiguriert ist, eine Vielzahl von Abständen zu der zweiten Wand in einer Vielzahl von winkelmäßig versetzten Entfernungsmessungsrichtungen zu messen.

4. Messvorrichtung nach einem der vorhergehenden Ansprüche, ferner umfassend eine Entfernungsmessungssteuerung (214), die konfiguriert ist, das Entfernungsmessungsmodul zu steuern, um den Abstand zu der zweiten Wand zu messen, wenn die Bezugshöhe gegen die erste Wand positioniert ist.

5. Messvorrichtung nach Anspruch 4, wobei die Entfernungsmessungssteuerung konfiguriert ist, um das Entfernungsmessungsmodul zu steuern, um den Abstand zu der zweiten Wand auf Grundlage von Daten zu messen, die von den Bewegungssensoren empfangen werden.

6. Messvorrichtung nach Anspruch 5, wobei die Entfernungsmessungssteuerung konfiguriert ist, um das Entfernungsmessungsmodul zu steuern, um den Abstand zu der zweiten Wand zu messen, wenn die von den Bewegungssensoren empfangenen Daten angeben, dass die Messvorrichtung stationär ist und/oder wenn die Bezugshöhe gegen die erste Wand positioniert ist.

7. Messvorrichtung nach einem der Ansprüche 4 bis 6, ferner umfassend einen Näherungssensor (218), der konfiguriert ist, um zu erfassen, wenn die Bezugshöhe gegen die Wand positioniert ist, und wobei die Entfernungsmessungssteuerung konfiguriert ist, um das Entfernungsmessungsmodul zu steuern, um den Abstand zu der zweiten Wand auf Grundlage von Daten zu messen, die von dem Näherungssensor empfangen werden.

8. Messvorrichtung nach einem der vorhergehenden Ansprüche, wobei der Datenprozessor konfiguriert ist, die Entfernungsmessungsdaten zu verarbeiten und die Bewegungsdaten zu verarbeiten durch Kombinieren einer Vielzahl von Bewegungsdaten und einer Vielzahl von Entfernungsmessungsdaten, um eine beste Anpassung für die Position und/oder Ausrichtung einer Vielzahl von Wänden des Raums zu bestimmen.

9. Messvorrichtung nach einem der Ansprüche 6 bis 8, wobei das Kombinieren der Bewegungsdaten und der Entfernungsmessungsdaten auf einem gewichteten Algorithmus basiert ist und wobei der gewichtete Algorithmus optional einen Least-Squares-Algorithmus oder einen Kalman-Filter umfasst.

10. Messvorrichtung nach Anspruch 9, wobei eine Gewichtung der Bewegungsdaten und/oder eine Gewichtung der Entfernungsmessungsdaten auf einem oder mehreren von Folgendem basiert ist: einem Fehler in den Bewegungsdaten; einem Fehler in den Entfernungsmessungsdaten; einem vorbestimmten Gewichtungswert für die Bewegungsdaten und/oder die Entfernungsmessungsdaten; einem Aktivierungszustand eines Konfidenzindikators; und einer Differenz zwischen einer Position und/oder Ausrichtung der Vorrichtung auf Grundlage der Entfernungsmessungsdaten und einer Position und/oder Ausrichtung der Vorrichtung auf Grundlage der Bewegungsdaten.

11. Verfahren zum Bestimmen einer Position und/oder Ausrichtung von einer oder mehreren Wänden eines Raums unter Verwendung einer Messvorrichtung, das Verfahren umfassend:
Positionieren (700) einer Bezugshöhe der Messvorrichtung gegen eine erste Wand des Raums, so dass die Messvorrichtung eine bekannte Ausrichtung und einen bekannten Versatz relativ zu der ersten Wand aufweist;
Messen durch eine Vielzahl von Bewegungssensoren einer Dreh- und Linearbewegung der Messvorrichtung in einem Körperrahmen, umfassend orthogonale x-, y- und z-Achsen, wobei die x-Achse des Körperrahmens und die y-Achse des Körperrahmens parallel zu einer Bezugsebene sind, die durch die Bezugshöhe definiert ist, und die z-Achse des Körperrahmens senkrecht zu der Bezugsebene ist; und
Messen (702) eines Abstands von der ersten Wand zu einer zweiten Wand durch ein Entfernungsmessungsmodul in einer Entfernungsmessungsrichtung parallel zu oder quer zu der Bezugsebene;
Empfangen von Bewegungsdaten von einem oder mehreren der Bewegungssensoren bei einem Datenprozessor, wenn die Bezugshöhe gegen die erste Wand positioniert ist;
Verarbeiten (704) der Bewegungsdaten bei dem Datenprozessor, um eine Position und/oder Ausrichtung der ersten Wand zu bestimmen;
Empfangen von Entfernungsmessungsdaten von dem Entfernungsmessungsmodul bei dem Datenprozessor, die für den Abstand von der ersten Wand zu der zweiten Wand angebend sind; und
Verarbeiten (706) der Entfernungsmessungsdaten bei dem Datenprozessor, um eine Position und/oder Ausrichtung der zweiten Wand zu bestimmen;
Bestimmen (800) durch den Datenprozessor, ob eine Position und/oder Ausrichtung von einer oder beiden von der ersten Wand und der zweiten Wand zuvor auf Grundlage früherer Bewegungsdaten und/oder früherer Entfernungsmessungsdaten bestimmt wurde; und
falls die Position und/oder Ausrichtung von einer oder beiden von der ersten Wand und der zweiten Wand zuvor bestimmt wurde, Kombinieren (804) durch den Datenprozessor von einer oder beiden von den Bewegungsdaten und den Entfernungsmessungsdaten mit den vorherigen Bewegungsdaten und/oder vorherigen Entfernungsmessungsdaten.

12. Computerprogramm, das konfiguriert ist, wenn es auf einem Computerprozessor ausgeführt wird, den Computerprozessor zu steuern, um die Schritte nach Anspruch 11 durchzuführen.

13. Einrichtung (104) zum Verarbeiten von Daten, umfassend einen Datenprozessor (314), der zu Folgendem konfiguriert ist:
Empfangen von Bewegungsdaten von einem oder mehreren Bewegungssensoren (220) einer Messvorrichtung (102);
Verarbeiten der Bewegungsdaten, um eine Position und/oder Ausrichtung einer ersten Wand zu bestimmen;
Empfangen von Entfernungsmessungsdaten von einem Entfernungsmessungsmodul (222) der Messvorrichtung;
Verarbeiten der Entfernungsmessungsdaten, um eine Position und/oder Ausrichtung einer zweiten Wand zu bestimmen;
Bestimmen, ob eine Position und/oder Ausrichtung von einer oder beiden von der ersten Wand und der zweiten Wand zuvor auf Grundlage früherer Bewegungsdaten und/oder früherer Entfernungsmessungsdaten bestimmt wurde; und
falls die Position und/oder Ausrichtung von einer oder beiden von der ersten Wand und der zweiten Wand zuvor bestimmt wurde, Kombinieren von einer oder beiden von den Bewegungsdaten und den Entfernungsmessungsdaten mit den vorherigen Bewegungsdaten und/oder vorherigen Entfernungsmessungsdaten.

14. Verfahren zum Verarbeiten von Daten, umfassend:
Empfangen von Bewegungsdaten von einem oder mehreren Bewegungssensoren der Messvorrichtung von einer Messvorrichtung;
Verarbeiten (704) der Bewegungsdaten durch einen Datenprozessor, um eine Position und/oder Ausrichtung einer ersten Wand zu bestimmen;
Empfangen von Entfernungsmessungsdaten von einem Entfernungsmessungsmodul der Messvorrichtung;
Verarbeiten (706) durch den Datenprozessor der Entfernungsmessungsdaten, um eine Position und/oder Ausrichtung einer zweiten Wand zu bestimmen;
Bestimmen (800) durch den Datenprozessor, ob eine Position und/oder Ausrichtung von einer oder beiden von der ersten Wand und der zweiten Wand zuvor auf Grundlage früherer Bewegungsdaten und/oder früherer Entfernungsmessungsdaten bestimmt wurde; und
falls die Position und/oder Ausrichtung von einer oder beiden von der ersten Wand und der zweiten Wand zuvor bestimmt wurde, Kombinieren (804) durch den Datenprozessor von einer oder beiden von den Bewegungsdaten und den Entfernungsmessungsdaten mit den vorherigen Bewegungsdaten und/oder vorherigen Entfernungsmessungsdaten.

15. Computerprogramm, das konfiguriert ist, wenn es auf einem Computerprozessor ausgeführt wird, den Computerprozessor zu steuern, um die Schritte des Verfahrens nach Anspruch 14 durchzuführen.

## Revendications

1. Dispositif de mesure (102) destiné à déterminer une position et/ou une orientation d'une ou de plusieurs parois d'une pièce, le dispositif de mesure comprenant :
une référence pour un positionnement contre une première paroi de la pièce de sorte que le dispositif de mesure présente un alignement et un décalage connus par rapport à la première paroi ; une pluralité de capteurs de mouvement (220) configurés pour mesurer un mouvement rotatif et linéaire du dispositif de mesure dans un cadre de corps comprenant des axes orthogonaux x, y et z, dans lequel l'axe x du cadre de corps et l'axe y du cadre de corps sont parallèles à un plan de référence défini par la référence, et l'axe z du cadre de corps est perpendiculaire au plan de référence ; et
un module de télémétrie (222) configuré pour mesurer une distance allant de la première paroi à une seconde paroi dans une direction de télémétrie parallèle ou transversale au plan de référence ; et
un processeur de données (208) configuré pour :
recevoir des données de mouvement en provenance d'un ou de plusieurs des capteurs de mouvement lorsque la référence est positionnée contre la première paroi ;
traiter les données de mouvement pour déterminer une position et/ou une orientation de la première paroi ;
recevoir des données de télémétrie en provenance du module de télémétrie indiquant la distance allant de la première paroi à la seconde paroi ; et
traiter les données de télémétrie pour déterminer une position et/ou une orientation de la seconde paroi,
le processeur de données étant en outre configuré pour :
déterminer si une position et/ou une orientation de la première paroi et/ou de la seconde paroi a été déterminée précédemment sur la base de données de mouvement précédentes et/ou de données de télémétrie précédentes ; et
si la position et/ou l'orientation de l'une ou des deux parmi la première paroi et la seconde paroi a été précédemment déterminée, combiner l'une ou les deux parmi les données de mouvement et les données de télémétrie avec les données de mouvement précédentes et/ou les données de télémétrie précédentes.

2. Dispositif de mesure de la revendication 1, dans lequel les capteurs de mouvement comprennent des capteurs inertiels, et/ou dans lequel la direction de télémétrie est parallèle à l'axe z du cadre de corps.

3. Dispositif de mesure d'une quelconque revendication précédente, dans lequel le module de télémétrie est configuré pour mesurer une pluralité de distances par rapport à la seconde paroi dans une pluralité de directions de télémétrie décalées angulairement.

4. Dispositif de mesure d'une quelconque revendication précédente, comprenant en outre un dispositif de commande de portée (214) configuré pour commander le module de télémétrie pour mesurer la distance jusqu'à la seconde paroi lorsque la référence est positionnée contre la première paroi.

5. Dispositif de mesure de la revendication 4, dans lequel le dispositif de commande de portée est configuré pour commander le module de télémétrie pour mesurer la distance jusqu'à la seconde paroi sur la base de données reçues en provenance des capteurs de mouvement.

6. Dispositif de mesure de la revendication 5, dans lequel le dispositif de commande de portée est configuré pour commander le module de télémétrie pour mesurer la distance jusqu'à la seconde paroi lorsque les données reçues en provenance des capteurs de mouvement indiquent que le dispositif de mesure est stationnaire et/ou lorsque la référence est positionnée contre la première paroi.

7. Dispositif de mesure de l'une quelconque des revendications 4 à 6, comprenant en outre un capteur de proximité (218) configuré pour détecter lorsque la référence est positionnée contre la paroi, et dans lequel le dispositif de commande de portée est configuré pour commander le module de télémétrie pour mesurer la distance jusqu'à la seconde paroi sur la base de données reçues en provenance du capteur de proximité.

8. Dispositif de mesure d'une quelconque revendication précédente, dans lequel le processeur de données est configuré pour traiter les données de télémétrie et traiter les données de mouvement en combinant une pluralité de données de mouvement et une pluralité de données de télémétrie pour déterminer un meilleur ajustement pour la position et/ou l'orientation d'une pluralité de parois de la pièce.

9. Dispositif de mesure de l'une quelconque des revendications 6 à 8, dans lequel la combinaison des données de mouvement et des données de télémétrie est sur la base d'un algorithme pondéré, et éventuellement dans lequel l'algorithme pondéré comprend un algorithme des moindres carrés ou un filtre de Kalman.

10. Dispositif de mesure de la revendication 9, dans lequel une pondération des données de mouvement et/ou une pondération des données de télémétrie est sur la base d'un ou de plusieurs parmi : une erreur dans les données de mouvement ; une erreur dans les données de télémétrie ; une valeur de pondération prédéterminée pour les données de mouvement et/ou les données de télémétrie ; un état d'activation d'un indicateur de confiance ; et une différence entre une position et/ou une orientation du dispositif sur la base des données de télémétrie et une position et/ou une orientation du dispositif sur la base des données de mouvement.

11. Procédé de détermination d'une position et/ou d'une orientation d'une ou de plusieurs parois d'une pièce à l'aide d'un dispositif de mesure, le procédé comprenant :
le positionnement (700) d'une référence du dispositif de mesure contre une première paroi de la pièce de sorte que le dispositif de mesure présente un alignement et un décalage connus par rapport à la première paroi ;
la mesure, par une pluralité de capteurs de mouvement, d'un mouvement rotatif et linéaire du dispositif de mesure dans un cadre de corps comprenant des axes orthogonaux x, y et z, dans lequel l'axe x du cadre de corps et l'axe y du cadre de corps sont parallèles à un plan de référence défini par la référence et l'axe z du cadre de corps est perpendiculaire au plan de référence ; et
la mesure (702), par un module de télémétrie, d'une distance allant de la première paroi à une seconde paroi dans une direction de télémétrie parallèle ou transversale au plan de référence ; et
la réception, au niveau d'un processeur de données, de données de mouvement en provenance d'un ou de plusieurs des capteurs de mouvement lorsque la référence est positionnée contre la première paroi ;
le traitement (704), au niveau du processeur de données, des données de mouvement pour déterminer une position et/ou une orientation de la première paroi ;
la réception, au niveau du processeur de données, de données de télémétrie en provenance du module de télémétrie indiquant la distance allant de la première paroi à la seconde paroi ; et
le traitement (706), au niveau du processeur de données, des données de télémétrie pour déterminer une position et/ou une orientation de la seconde paroi ;
le fait de déterminer (800), par le processeur de données, si une position et/ou une orientation de la première paroi et/ou de la seconde paroi a été déterminée précédemment sur la base de données de mouvement précédentes et/ou de données de télémétrie précédentes ; et
si la position et/ou l'orientation de l'une ou des deux parmi la première paroi et la seconde paroi a été précédemment déterminée, la combinaison (804), par le processeur de données, de l'une ou des deux parmi les données de mouvement et les données de télémétrie avec les données de mouvement précédentes et/ou les données de télémétrie précédentes.

12. Programme informatique configuré, lorsqu'il est exécuté sur un processeur informatique, pour commander au processeur informatique d'entreprendre les étapes de la revendication 11.

13. Appareil (104) de traitement de données comprenant un processeur de données (314) configuré pour :
recevoir des données de mouvement en provenance d'un ou de plusieurs capteurs de mouvement (220) d'un dispositif de mesure (102) ;
traiter les données de mouvement pour déterminer une position et/ou une orientation d'une première paroi ;
recevoir des données de télémétrie en provenance d'un module de télémétrie (222) du dispositif de mesure ;
traiter les données de télémétrie pour déterminer une position et/ou une orientation d'une seconde paroi ;
déterminer si une position et/ou une orientation de la première paroi et/ou de la seconde paroi a été déterminée précédemment sur la base de données de mouvement précédentes et/ou de données de télémétrie précédentes ; et
si la position et/ou l'orientation de l'une ou des deux parmi la première paroi et la seconde paroi a été précédemment déterminée, combiner l'une ou les deux parmi les données de mouvement et les données de télémétrie avec les données de mouvement précédentes et/ou les données de télémétrie précédentes.

14. Procédé de traitement de données comprenant :
la réception, en provenance d'un dispositif de mesure, de données de mouvement en provenance d'un ou de plusieurs capteurs de mouvement du dispositif de mesure ;
le traitement (704), par un processeur de données, des données de mouvement pour déterminer une position et/ou une orientation d'une première paroi ;
la réception, en provenance du dispositif de mesure, de données de télémétrie en provenance d'un module de télémétrie du dispositif de mesure ;
le traitement (706), par le processeur de données, des données de télémétrie pour déterminer une position et/ou une orientation d'une seconde paroi ;
le fait de déterminer (800), par le processeur de données, si une position et/ou une orientation de la première paroi et/ou de la seconde paroi a été déterminée précédemment sur la base de données de mouvement précédentes et/ou de données de télémétrie précédentes ; et
si la position et/ou l'orientation de l'une ou des deux parmi la première paroi et la seconde paroi a été précédemment déterminée, la combinaison (804), par le processeur de données, de l'une ou
des deux parmi les données de mouvement et les données de télémétrie avec les données de mouvement précédentes et/ou les données de télémétrie précédentes.

15. Programme informatique configuré, lorsqu'il est exécuté sur un processeur informatique, pour commander au processeur informatique d'entreprendre les étapes du procédé de la revendication 14.
